Europäisches Patentamt

European Patent Office

Office européen des brevets

(19)

(11) **EP 1 176 989 B1**

(12) **FASCICULE DE BREVET EUROPEEN**

(45) Date de publication et mention
de la délivrance du brevet:
**24.03.2004 Bulletin 2004/13**

(51) Int Cl.⁷: **A61L 2/03**, F24D 17/00,
C02F 1/48, C02F 1/46

(21) Numéro de dépôt: **00920807.5**

(22) Date de dépôt: **14.04.2000**

(86) Numéro de dépôt international:
**PCT/FR2000/000982**

(87) Numéro de publication internationale:
**WO 2000/062822 (26.10.2000 Gazette 2000/43)**

(54) **PROCEDE D'ELIMINATION DES LEGIONELLA D'UN FLUX AQUEUX COLONISE PAR ELECTROPULSATION**

VERFAHREN ZUR ENTFERNUNG VON LEGIONELLEN AUS WÄSSRIGEN STRÖMEN MITTELS ELEKTROPULSIERUNG

METHOD FOR ELIMINATING LEGIONELLA FROM A COLONIZED AQUEOUS FLUX BY ELECTROPULSATION

(84) Etats contractants désignés:
**AT BE CH CY DE DK ES FI FR GB GR IE IT LI LU MC NL PT SE**

(30) Priorité: **15.04.1999 FR 9904750**

(43) Date de publication de la demande:
**06.02.2002 Bulletin 2002/06**

(73) Titulaires:
- **ELECTRICITE DE FRANCE**
  **75008 Paris (FR)**
  Etats contractants désignés:
  **FR**
- **CENTRE NATIONAL DE LA RECHERCHE SCIENTIFIQUE**
  **75016 Paris Cédex (FR)**

(72) Inventeurs:
- **EYNARD, Nathalie**
  **F-31400 Toulouse (FR)**
- **CABANES, Pierre-André, René**
  **F-75018 Paris (FR)**
- **TEISSIE, Justin**
  **F-31520 Ramonville St-Agne (FR)**

(74) Mandataire: **Vaillant, Jeanne et al
Ernest Gutmann - Yves Plasseraud SA,
3, rue Chauveau-Lagarde
75008 Paris (FR)**

(56) Documents cités:
WO-A-94/00861     FR-A- 2 288 060
FR-A- 2 513 087     US-A- 5 282 940

## Description

La présente invention concerne un procédé de traitement d'un flux aqueux colonisé par *Legionella* par l'application au flux d'un champ électrique pulsé, ainsi qu'un procédé de traitement d'un flux aqueux par électropulsation et son application à l'élimination de *Legionella*.

Les *Legionella* sont des bacilles Gram négatif qui sont à l'origine d'une pneumopathie potentiellement grave appelée "maladie des légionnaires" et d'un syndrome grippal bénin appelé "fièvre de Pontiac". On estime à 3000 le nombre de cas annuels de maladie des légionnaires en France, dont 400 à 500 sont réellement comptabilisés par le Centre National de Référence.

Ces bactéries se multiplient dans des milieux hydriques et plus facilement lorsque la température se situe entre 30 et 40°C, leur survie devenant difficile au-delà de 50°C. La contamination peut intervenir par inhalation des microgoutelettes d'eau contenant ces bactéries, notamment lors de l'utilisation de l'eau chaude sanitaire, essentiellement la prise de douche et par l'intermédiaire d'une installation de climatisation. Dans ce cas, ce n'est pas tant l'air inspiré à l'intérieur d'un immeuble climatisé qui pourra transporter la bactérie (sauf en cas de dysfonctionnement comme la mauvaise position de la prise d'air extérieur), que le panache qui sort de la tour aéroréfrigérante, située en général sur le toit de l'immeuble.

Avec un taux de mortalité pouvant atteindre 10%, cette maladie pose un difficile problème de prévention, notamment à l'hôpital où se trouvent des personnes fragiles qui pourront plus facilement développer la maladie, et dans les établissements thermaux, dont l'eau ne peut être traitée par les moyens classiques.

Lorsqu'un cas de maladie des légionnaires est diagnostiqué, les services compétents recherchent la source contaminante. En cas de réponse positive, il faut procéder à une décontamination de l'installation qui comporte, en prenant l'exemple des systèmes d'eau chaude sanitaire, plusieurs étapes de montées en température du chauffe-eau (70°C), suivies de "rinçage" des canalisations et robinetteries, après isolation du circuit en question. La chloration à des niveaux résiduels de chlore libre importants peut également se faire, individuellement ou en association à la première technique. Malheureusement, faute de traitement "continu", dans la majorité des cas, on assiste à une recolonisation du système dans les semaines qui suivent.

Il existe un besoin pour un procédé et des installations capables de détruire ces bactéries de façon efficace, sans entraîner d'effet secondaire néfaste, comme le risque de brûlure ou les effets toxiques du chlore et qui pourrait fonctionner en permanence dans des conditions économiques favorables.

Il est connu, d'appliquer un champ électrique à des cellules : lorsque l'on place une cellule dans un champ électrique, les lignes de champ sont déviées par celle-ci, ce qui provoque une accumulation des charges à la surface de la cellule. Ainsi, il en résulte une différence de potentiel transmembranaire induite $\Delta V$ qui se superpose à la différence native $\Delta\Psi_o$ [Bernhardt J. et Pauly H. (1973):(2)].

La formule la plus complète retenue dans le cas d'un champ à cinétique en vague carrée et d'une cellule sphérique en suspension est la suivante [Sale A.J.H. et Hamilton W.A. (1967) : (18) ; Tsong T.Y. et coll (1976) : (24) ; Kinosita K. et Tsong T.Y. (1977a) : (9) ] :

$$\Delta V_t = fg(\lambda)\ r\ E_t\ \cos\theta\ (1-e^{-t/\tau p})$$

L'expression de cette différence de potentiel induite en un point M au temps t est fonction de :

$E_t$ : l'intensité du champ électrique appliqué au temps t,

f : le facteur forme de la cellule (1,5 dans le cas d'une sphère),

$g(\lambda)$ : le facteur de la perméabilité membranaire $\lambda$,

r : le rayon de la cellule,

$\theta$ : l'angle entre le vecteur champ électrique macroscopique et la normale au plan de la membrane au point considéré M,

$\tau_p$ : est le temps de charge de la capacité membranaire (de l'ordre de la microseconde),

t : temps d'application du champ.

Lorsque la durée des impulsions est très supérieure au temps de charge de la membrane (t >> $\tau_p$), le terme $(1-e^{-t/\tau p})$ devient très proche de 1, on retrouve alors, à l'état stationnaire la formulation classique :

$$\Delta V_t = fg(\lambda)\ r\ E_t\ \cos\theta$$

Le terme en $\cos\theta$ indique que pour une valeur de champ donnée, l'amplitude de cette différence de potentiel n'est pas identique en tout point de la cellule. Elle est maximale aux points faisant face aux électrodes (pôles) et diminue le long de la surface cellulaire pour s'annuler à l'équateur.

Cette différence de potentiel générée par le champ s'ajoute à la différence de potentiel de repos $\Delta\Psi_o$. Il en résulte une différence de potentiel résultante $\Delta Vr$.

$$\Delta Vr = \Delta\Psi_o + \Delta V$$

Au niveau de l'hémisphère cellulaire situé face à l'anode, les valeurs numériques de $\Delta\Psi_o$ et de $\Delta V$ s'additionnent pour tenir compte de la vectorialité de l'effet du champ, ce qui entraîne une hyperpolarisation de la membrane. En revanche, au niveau de l'hémisphère situé face à la cathode, les valeurs numériques de $\Delta\Psi_o$ et de $\Delta V$ se retranchent, et la membrane subit une dépolarisation.

Lorsque cette différence de potentiel membranaire résultante devient supérieure à une valeur seuil estimée à 200-250 mV [Teissié et Tsong (1981):(20)], il y a induction d'un phénomène de perméabilisation [Neumann E. et Rosenheck K. (1972) : (13) ; Kinosita K. et Tsong T.Y. : [(10) (1977b)].

La structure membranaire responsable de cette perméabilité membranaire est inconnue à ce jour, et on emploie préférentiellement le terme de structure transitoire de perméabilisation (STP), ce qui est exprimé de façon usuelle par le terme de "pores".

Dans des conditions d'électropulsation particulières drastiques, l'électroperméabilisation est un phénomène irréversible qui conduit à la mort cellulaire ou électromortalité notamment dans le cas de microorganismes [Hamilton et Sale (1967):(5) ; Sale et Hamilton (1967):(18) : Hülsheger et al., (1981):(6), (1983):(7) ; Mizuno et Hori (1988):(12) ; Kekez et al. (1996):(8), Grahl et Märkl (1996):(4)]. Cette propriété a été utilisée soit pour lyser des cellules afin de récupérer un métabolite d'intérêt, non excrété naturellement par la cellule, soit pour éradiquer des cellules en environnement (désinfection) ou dans les fluides alimentaires (stérilisation non thermique) [Knorr et al. (1994):(11) ; Qin et al. (1996):(15) ; Qin et al. (1998):(16)].

L'électromortalité peut avoir lieu tout de suite après l'électropulsation (mortalité à court terme) ou bien à plus long terme.

Il est connu d'appliquer des champs électriques pulsés à des cultures cellulaires, notamment en lit fixe. [Sale et Hamilton (1967):(18)]

Dans ces conditions, il est connu que la sensibilité des cellules dépend notamment de la nature et de la géométrie des électrodes ainsi que des conditions électriques utilisées (intensité du champ, nombre, forme et durée des impulsions) et de la composition du milieu.

Il existe deux systèmes de pulsation suivant le volume traité : un système de pulsation à lit fixe encore appelé batch, qui ne permet de traiter que de faibles volumes suivant les dimensions des électrodes et un système de pulsation en flux qui permet de traiter une suspension cellulaire en écoulement. Pour le processus en écoulement, deux stratégies sont possibles : le flux continu et le flux séquentiel. Dans le second modèle, la chambre de pulsation est remplie, le flux est arrêté, le champ est ensuite appliqué puis la chambre est vidée.

Ce modèle en flux séquentiel a été développé pour des travaux d'électrofusion où le contact est médié par diélèctrophorèse [Bates et al., (1983):(1) (Zachrisson and Bomman, (1984):(25).

L'avantage du système en flux est de pouvoir traiter des volumes importants.

Usuellement, on utilise des systèmes en flux avec un champ perpendiculaire à l'écoulement [Teissié et al. (1988):(22; Teissié et Rols, (1988):(21),Sixou et Teissié, (1990):(19) (Teissié et al., 1992): (23), Rols et al., (1992): (17; Bruggemann et al., (1995):(3);Qin et al. (1996):(15)], des systèmes avec des électrodes coaxiales donnant un champ non uniforme mais également perpendiculaire à l'écoulement [Qin et al., (1996):(15) Qin et al., (1998):(16)].

Pour des flux traités en écoulement, les impulsions peuvent être en vagues carrées ou à déclin exponentiel (décharge capacitive) Qin et al. (1994):14.

Les demandeurs ont maintenant mis au point un procédé de traitement d'un milieu colonisé, par application d'un champ électrique pulsé à un flux de milieu colonisé, qui remédie aux inconvénients ci-dessus (chloration, recolonisation, risques de brûlure, contraintes économiques), même pour de grands volumes de milieu aqueux à traiter.

Ainsi, selon un premier objet de l'invention, celle-ci concerne un procédé de traitement d'un flux aqueux colonisé par des cellules par application d'un champ électrique pulsé d'amplitude, encore appelée intensité, inférieure à 1 kV/cm, les impulsions étant délivrées à une fréquence de 40 à 60 Hz. Le nombre de pulsations appliquées à la cellule peut être de l'ordre de 1 à 200. De préférence, le nombre de pulsations appliquées est de l'ordre de 40 à 200.

L'invention concerne également l'application du procédé à l'élimination de *Legionella*.

Selon un autre objet de l'invention, celle-ci concerne un procédé de destruction de *Legionella*, caractérisé en ce que l'on soumet un flux aqueux colonisé par *Legionella* à un champ électrique pulsé d'intensité inférieure à 1 kV/cm, les impulsions étant délivrées à une fréquence de 40 à 60 Hz. Le nombre de pulsations appliquées aux cellules peut être de l'ordre de 1 à 200.

Ainsi, on peut parvenir à une éradication totale des bactéries Legionella par électropulsation. Les résultats sont obtenus en utilisant de faibles intensités du champ appliqué.

L'invention sera mieux comprise au vu des figures annexées et de la description détaillée ci-après.

La figure 1 représente le schéma d'une installation de mise en oeuvre du procédé.

La figure 2 représente les résultats d'une étude de l'effet de l'intensité du champ électrique, lorsque l'on double le nombre d'impulsions.

Par flux colonisé selon l'invention, on entend tout milieu aqueux domestique, naturel ou industriel pouvant comporter ou comportant *Legionella* notamment, comme des circuits de refroidissement, des circuits secondaires de distribution d'eau, notamment les circuits des systèmes de climatisation et de façon générale tout milieu où *Legionella* est susceptible de vivre, survivre ou se multiplier.

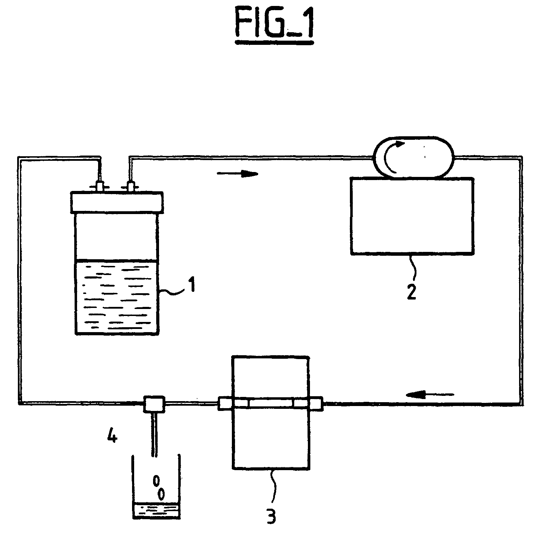

Le procédé de l'invention est mis en oeuvre dans des installations en flux continu conforme à l'installation schématisé à la figure 1. Le flux de milieu aqueux colonisé est conduit à partir d'un réservoir 1, par exemple à l'aide d'une pompe péristaltique 2, vers une chambre d'électropulsation 3 où lui est appliqué le champ pulsé, puis est conduit, après le traitement, vers une sortie 4 qui recycle le flux décolonisé, dans le cas d'un circuit fermé, ou qui rejette le flux décolonisé, dans le cas d'un flux consommable (eau chaude sanitaire), et/ou qui recueille le flux décolonisé aux fins d'analyse. Les traits continus reliant les éléments du circuit sur le schéma de la figure 1 représentent des tuyaux.

Les chambres d'électropulsation utilisables selon l'invention et les générateurs sont connus et sont adaptés au volume des flux à traiter. On peut également envisager des chambres d'électropulsation installées en parallèle chacune avec leur générateur associé. Pour mettre en oeuvre le procédé de l'invention, on utilise des fréquences de l'ordre de 40 à 60 Hz, en particulier d'environ 50 Hz.

En variante des flux continus, on peut envisager des flux séquentiels, l'application à des flux continus est cependant préférée. Par ailleurs, l'application d'un champ sensiblement perpendiculaire à l'écoulement peut être utilisé, mais d'autres orientations sont envisageables, notamment sensiblement parallèle à l'écoulement ; le procédé de la présente invention peut-être mis en oeuvre avec un champ uniforme ou non.

Du point de vue de la forme des impulsions, on peut utiliser des vagues carrées, mais d'autres profils, notamment des vagues triangulaires, en trapèze, à déclin exponentiel ou de formes sinusoïdales sont envisageables. Le choix du profil peut dépendre notamment des autres modalités que sont l'intensité du champ, la durée des impulsions, et le nombre des impulsions. De préférence, on utilise des vagues carrées.

Les implusions selon l'invention peuvent avoir une durée de 1 à 20 ms, de préférence de l'ordre de 10 ms.

Exemple

Les bactéries

Les suspensions bactériennes utilisées lors des expériences sont préparées directement à partir de colonies sur boîte. La suspension est réalisée de manière à obtenir une $DO_{(650\ nm)} \approx 0,1$ (correspondant à $\approx 2x10^8$ bactéries/ ml). Les expériences sont réalisées sur des *L. pneumophila* isolées de l'environnement ou prélevées en milieu hospitalier.

Les générateurs

Les générateurs utilisés dans cette étude (Jouan, France) génèrent des impulsions à cinétique en vague carrée de polarité négative. La durée des impulsions peut varier entre 0,5 $\mu$s et 24 ms et la fréquence d'application de 0,1 à 10 Hz en pilotage interne et illimitée en pilotage externe. Le voltage délivré par l'appareil est de 1500 volts maximum (8 ampères). Dans le but de reproduire un courant alternatif, un inverseur de polarité peut être branché sur la sortie du générateur de tension.

Le montage expérimental

Il est placé à l'intérieur d'une hotte à flux laminaire afin de travailler dans les conditions de sécurité requises. Le réglage du débit se fait par la pompe péristaltique et permet d'ajuster le flux entre 0 et 24 ml/min.

La chambre d'électropulsation (l x h x L = 0,2 x 0,2 x 2 cm) a un volume de 80 $\mu$l. La longueur des électrodes étant de 2 cm, le débit est ajusté de façon à ce que les cellules soient soumises à un nombre n d'impulsions pendant leur passage.

En batch

Les résultats en flux ont été obtenus après des travaux préliminaires en batch. Les données obtenues ont permis d'envisager l'optimisation des paramètres électriques afin d'obtenir une mortalité totale des bactéries et une puissance nécessaire compatible avec une utilisation commerciale. L'effet plus létal observé pour des délais courts entre les impulsions permet d'envisager d'utiliser des fréquences de l'ordre de celle du réseau (50 Hz) avec une bonne efficacité.

La mortalité cellulaire en flux est optimisée par le choix d'amplitudes plus faibles appliquées avec un nombre d'impulsions plus grand.

En flux

Les résultats montrent que la sensibilité des *Legionella* électropulsées en flux est du même ordre que celle préalablement déterminée en "batch".

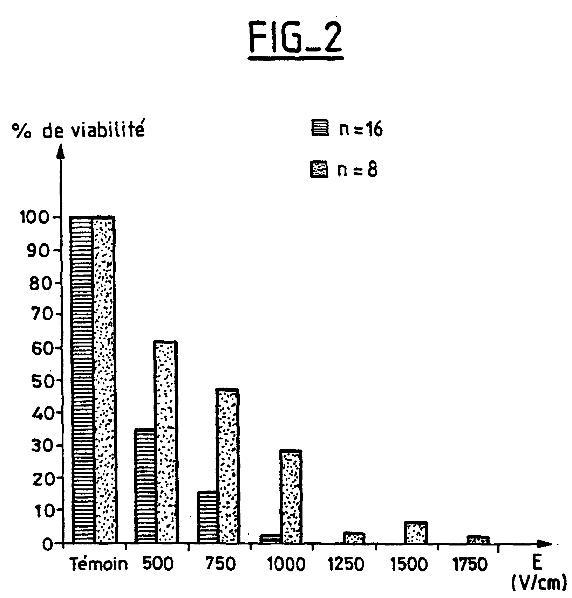

Le doublement du nombre d'impulsions entraîne une augmentation de la mortalité cellulaire d'un facteur de 2 à 10 selon l'amplitude de champ appliquée, comme cela apparaît à la figure 2.

Dans un deuxième temps, les électropulsations sont toutes réalisées à une fréquence de 50 Hz. La gamme d'amplitude utilisée (entre 100 et 500 V/cm) a été fortement diminuée par rapport aux expériences précédentes. En conséquence, le nombre d'impulsions appliquées a été augmenté (jusqu'à 200 impulsions successives).

Les expériences ont été menées en vue de déterminer les conditions électriques donnant 100% de mortalité cellulaire.

| E(V/cm) Nbre d'impulsions | 100 | 200 | 300 | 400 | 500 |
|---|---|---|---|---|---|
| 10 | | | | > 2% | > 2% |
| 20 | | | | > 2% | 1% |
| 40 | > 2% | > 2% | > 2% | > 2% | 0 |
| 80 | | | | 0 | |
| 120 | 13% | $10^{-5}$% | 0 | | |
| 160 | > 0,2% | > 0,2% | 0 | | |
| 200 | > 0,2% | 0 | 0 | | |

Le tableau I ci-dessus présente le pourcentage de survie obtenu après application d'un nombre variable d'impulsions en vagues carrées de diverses amplitudes. Les colonnes donnent l'évolution de la survie pour une amplitude de champ donnée et un nombre croissant d'impulsions. La lecture en ligne donne la survie des cellules pour un nombre donné d'impulsions appliquées à des amplitudes croissantes.

Dans la gamme de conditions testées, on peut trouver différents couples (amplitude / durée) qui entraînent une mortalité totale : soit un grand nombre d'impulsions de faible amplitude, soit un nombre plus petit d'impulsions plus intenses. Afin de déterminer les meilleures conditions expérimentales, l'énergie mise en jeu lors de ces différentes électropulsations a été calculée.

L'énergie mise en jeu dans le volume expérimental (80 µl) a été calculée selon la formule suivante :

$$W = V \cdot C \cdot E^2 \cdot Tp \text{ (en Joules)}$$

avec

V = volume de l'échantillon (8.10-8 m$^3$)
C = conductance de l'échantillon (0,02 Siemens / m)

E = amplitude du champ (en Volts / m)
Tp = durée de l'électropulsation (n x t) (en s) avec n variable et t = 10 ms

La puissance électrique nécessaire est calculée selon la formule

$$P = W / Tt \text{ (en Watts), avec } Tt = \text{Temps de traitement total de l'échantillon (en s).}$$

La différence entre Tp (la durée de Pulsation) et Tt (la durée du traitement) est due à l'utilisation d'impulsions séparées par des délais où l'amplitude du courant est égale à 0.
A 50 Hz pour une durée d'impulsion t = 10 ms (0,01 s), pour un nombre d'impulsions, on a Tp = n x 0,01 s et Tt = n x 0,02 s.

Tableau 2a

| Conditions entraînant 90% à 99% de mortalité | | | | | | |
|---|---|---|---|---|---|---|
| E (V/cm) | n | $E^2(v/m)^2$ | n x T (s) | W(J) | P(Watts) | $W(kJ/m^3)$ |
| 100 | 120 | 1E+08 | 1,20 | 0,19 | 0,08 | 2400 |
| 100 | 160 | 1E+08 | 1,60 | 0,26 | 0,08 | 3200 |
| 100 | 200 | 1 E+08 | 2,00 | 0,32 | 0,08 | 4000 |
| 200 | 40 | 4E+08 | 0,40 | 0,26 | 0,32 | 3200 |
| 200 | 120 | 4E+08 | 1,20 | 0,77 | 0,32 | 9600 |
| 200 | 160 | 4E+08 | 1,60 | 1,02 | 0,32 | 12800 |
| 300 | 40 | 9E+08 | 0,40 | 0,58 | 0,72 | 7200 |
| 400 | 20 | 1,6E+09 | 0,20 | 0,51 | 1,28 | 6400 |
| 400 | 40 | 1,6E+09 | 0,40 | 1,02 | 1,28 | 12800 |
| 500 | 10 | 2,5E+09 | 0,10 | 0,40 | 2,00 | 5000 |
| 500 | 20 | 2,5E+09 | 0,20 | 0,80 | 2,00 | 10000 |

Tableau 2b

| Conditions entraînant 100% de mortalité | | | | | | |
|---|---|---|---|---|---|---|
| E (V/cm) | n | $E^2(v/m)^2$ | n x T (s) | W(J) | P(Watts) | $W(kJ/m^3)$ |
| 200 | 200 | 4E+08 | 2,00 | 1,28 | 0,32 | 16000 |
| 300 | 120 | 9E+08 | 1,20 | 1,73 | 0,72 | 21600 |
| 300 | 160 | 9E+08 | 1,60 | 2,30 | 0,72 | 28800 |
| 200 | 200 | 9E+08 | 2,00 | 2,88 | 0,72 | 36000 |
| 400 | 80 | 1,6E+08 | 0,80 | 2,05 | 1,28 | 25600 |
| 500 | 40 | 2,5E+08 | 0,40 | 1,60 | 2,00 | 20000 |

Les tableaux 2a et 2b présentent l'énergie et la puissance mises en jeu pour le traitement électrique d'une suspension bactérienne. Les colonnes 1 à 4 donnent les valeurs de champ et du nombre d'impulsions appliquées ainsi que les intermédiaires de calcul Tp et $E^2$. Les colonnes 5 et 6 correspondent à l'énergie (W) et à la puissance (P) nécessaires pour traiter 80 µl de solution bactérienne. La colonne 7 indique, pour chaque condition expérimentale, l'énergie nécessaire au traitement d'un mètre cube de suspension.
Dans ces deux tableaux, l'analyse pour un volume pulsé de 80 µl permet d'observer une limite en termes d'énergie à appliquer pour entraîner 100% de mortalité cellulaire. Cette énergie minimale nécessaire est de 1,28 J pour 80 µl soit 16000 $kJ/m^3$. L'énergie maximum, n'entraînant pas une mortalité totale, est de 12800 $kJ/m^3$ dans les conditions testées.
Afin de déterminer la possibilité d'application de cette méthode à une utilisation commerciale, une estimation du coût en énergie a été réalisée d'après les calculs d'énergie obtenus dans le dernier tableau.
Le calcul utilisé est :

**EP 1 176 989 B1**

la puissance P est donnée par P = (W x m3 à traiter) / temps de traitement en secondes et l'énergie = P x temps de traitement en h.

Dans l'état actuel des travaux, la prévision de coût en énergie pour l'éradication totale des Légionelles est de 16000 kJ/m$^3$ soit 1,33 kWh pour un chauffe-eau de 300 litres. Si le traitement est réalisé en 5 heures, la puissance nécessaire sera de 270 Watts.

Ainsi, on peut prévoir une mortalité de 90 à 99% (Tableau 3a), respectivement 100% (Tableau 3b) dans les conditions présentées dans ces tableaux.

**REFERENCES**

**1.** Bates, G. W., J. J. Gaynor and N. S. Shekhawat. 1983. Fusion of plant protoplasts by electric fields. *Plant physiol.* 72:1110-1113

**2.** Bernhardt, J. and H. Pauly. 1973. On the generation of potential differences across the membranes of ellipsoidal cells in an altemating electrical field. *Biophysik. 10:89-98.*

**3.** Bruggemann, U.E.C. Roux, J. Haning and C. Nicolau. 1995. Low-oxygen affinity red cells produced in a large volume, continuous flow electroporation system. *Transfusion.* 35:478-486

**4.** Grahl, T. and H. Markl. 1996. Killing of microorganisms by pulsed electric fields. *Applied Microbiol and biotechnicnol.* 45:148-157.

**5.** Hamilton, W..A. and A.J.H. Sale. 1967. Effect of high electric fields on microorganisms: II. Mechanism of action of the lethal effect. *Biochim. Biophysis. Acta.* 148:789-800.

**6.** Hülsheger, H., J. Potel and E. G. Niemann. 1981. Killing of bacteria with electric pulses of high field strength. *Radiat Environ. Biophys.* 20:53-65.

**7.** Hüseheger, H. J. Potel and E.G. Niemann. 1983. Electric field effects on bacteria and yeast cells. *Radiat Environ. Biophys.* 22:149-162.

**8.** Kekez, M. M., P. Savic and B.F. Johnson. 1996. Contribution to the biophysics of the lethal effects of electric filed on microorganisms. *Biochim. Biophysis. Acta.* 1278:79-88.

**9.** Kinosita, K. and T.Y. Tsong. 1977. Voltage induced pore formation and hemolysis of human erythrocytes. *Biochim. Biophys. Acta.* 471:227-224.

**10.** Kinosita, K. and T.Y. Tsong; 1977. Formation and resealing of pores of controlled sizes in human erythrocyte membranes. *Nature.* 268:108-114.

**11.** Knorr, D., M. Gueulen, T. Grahl and W. Sitzmann. 1994. Food application of high electric field pulses. *Trends in food Science and technology.* 5:71-75.

**12.** Mizuno, A. and Yori. 1988. Destrcution of living cells by pulsed high voltage application. *IEEE trans. Ind. Appl.* 24:387-394.

**13.** Neumann, E. and K. Rosenheck. 1972. Permeability changes induced by electric impulses in vesicular membranes. *J. Membr. Biol.* 10:279-290.

**14.** Qin, B. L. , Q. Zhang, G.V. Barbosa-Canovas, B. G. Swanson and P.D. Pedrow. 1994. Inactivation of microorganisms by pulsed electric fields of différent voltage wave forms. *IEEE Trans. Dielec. Elec. Insulation.* 1:1047-1057.

**EP 1 176 989 B1**

**15.** Qin, B. L.,U. R. Pothakamury, G.V. Barbosa-Canovas and B.G. et Swanson. 1996.
Nonthermal pasteurization of liquid foods using high intensity pulsed electric fields. *Critical Reviews in food science and nutrition.* 36/603-627.

**16.** Qin, B.L., G.V. Barbosa-Canovas, B.G. Swanson, P.D. Pedrow and R.G. Olsen.1998. inactivating Microorganisms using a pulsed electric field continuous treatment system. *IEEE transactions on industry applications.* 34: 43-50.

**17.** Rots, M.P. D. Coulet and J. Teissié. 1992. Highly efficient transfection of mammalian cells by electric field pulses. Application to large volumes of cell culture by using a flow system. *Eur. J. Biochem.* 206:115-121.

**18.** Sale, A. J. H. and W.A. Hamilton. 1967. Effect of high electric fields on microorganisms: I. Killing of bacteria and yeast. *Biochim. Biophys. Acta.* 148. 781-788.

**19.** Sixou, S. and J. Tessié. 1990. Specific electropermeabilization of leucocytes in blood sample and application to large volumes of cells. *Biochim. Biophys. Acta.* 1028:154-160.

**20.** Tissié, J. and T.Y. Tsong 1981. Electric field induced transient pores in phospholipid bilayer vesicles. Biochemistry 20:1548-1554.

**21.** Tessié, J. and R. M. P. 1988. Electrofusion of large volumes of cells in culture:2-Cells growing in suspension. *Bioelectrochem. Bioenerg.* 19:59-66.

**22.** Tessié, J. and C. P. 1988. Electrofusion of large volumes of cells in culture:1-Anchorage dependent strains. *Bioelectrochem. Bioenerg.* 19:49-57.

**23.** Tessié, J., S. Sixou and M. P. Rols. 1992. Large volume cell electropermeabilization and electrofusion by a flow system in Charge and field effects in biosystems III Birkhauser press, 449-466.

**24.** Tsong, T. Y., T. T. Tsong, E. Kingsley and R. Siliciano. 1976. Relaxion phenomena in human erythrocyte suspension. *Biophys.* J. 16:1091-1104.

**25.** Zachrisson, A. and C. H. Bornamn. 1984. application of electric field fusion in plant tissue culture. *Physiol. Plant.* 61:314-320.

**Revendications**

1. Procédé de traitement d'un flux aqueux colonisé par *Legionella* par application d'un champ électrique pulsé, les impulsions étant délivrées à une fréquence de 40 à 60 Hz.

2. Procédé selon la revendication 1, **caractérisé en ce que** l'intensité du champ électrique appliqué est inférieure à environ 1 kV/cm.

3. Procédé selon la revendication 1 ou 2, **caractérisé en ce que** le nombre d'impulsions appliquées à la cellule est de l'ordre de 1 à 200.

4. Procédé selon l'une des revendications 1 à 3, **caractérisé en ce que** le flux aqueux est naturel, domestique ou industriel.

5. Procédé selon l'une des revendications 1 à 4, **caractérisé en ce que** le flux est continu ou séquentiel.

6. Procédé selon l'une des revendications 1 à 5, **caractérisé en ce que** le flux est continu.

7. Procédé selon l'une des revendications 1 à 6, **caractérisé en ce que** le champ est sensiblement perpendiculaire au flux.

8. Procédé selon l'une des revendications 1 à 6, **caractérisé en ce que** le champ est sensiblement parallèle au flux.

**9.** Procédé selon l'une des revendications 1 à 8, **caractérisé en ce que** les impulsions ont une durée de 1 à 20 ms, de préférence de l'ordre de 10 ms.

**10.** Procédé selon l'une des revendications 1 à 9, **caractérisé en ce que** les impulsions sont des vagues carrées, des vagues triangulaires, en trapèze, à déclin exponentiel, ou de formes sinusoïdales.

**11.** Procédé selon l'une des revendications 1 à 10, **caractérisé en ce que** les impulsions sont à vagues carrées.

**12.** Procédé selon l'une des revendications 1 à 11, **caractérisé en ce que** le champ électrique pulsé est uniforme.

**13.** Procédé selon l'une des revendications 1 à 12, **caractérisé en ce que** le champ appliqué a une valeur supérieure à 100 V/cm.

**14.** Procédé selon l'une des revendications 1 à 13, **caractérisé en ce que** les impulsions sont unipolaires ou bipolaires.

**15.** Procédé selon l'une des revendications 1 à 14, **caractérisé en ce que** les impulsions sont unipolaires.

**16.** Procédé de destruction de *Legionella* dans un flux aqueux colonisé, dans lequel on soumet le flux aqueux colonisé par *Legionella* à un champ électrique pulsé selon le procédé de l'une des revendications 1 à 15.

**Claims**

**1.** A method for treating an aqueous flow colonized by *Legionella*, comprising applying a pulsed electric field, the delivered pulses being delivered at a frequency of 40 to 60 Hz.

**2.** The method according to claim 1, **characterized in that** the intensity of the applied electric field is less than about 1 kV/cm.

**3.** The method according to claim 1 or 2, **characterized in that** the number of pulses applied to cells is of about 1 to 200.

**4.** The method according to any of claims 1 to 3, wherein the aqueous flow is natural, domestic or industrial.

**5.** The method according to any of claims 1 to 4, wherein the flow is continuous or sequential.

**6.** The method according to any of claims 1 to 5, **characterized in that** the flow is continuous.

**7.** The method according to any of claims 1 to 6, **characterized in that** the electric field is substantially perpendicular to the flow.

**8.** The method according to any of claims 1 to 6, **characterized in that** the electric field is substantially parallel to the flow.

**9.** The method according to any of claims 1 to 8, **characterized in that** the pulses have a pulse duration of 1 to 20 ms, preferably of about 10 ms.

**10.** The method according to any of claims 1 to 9, **characterized in that** the pulses are square wave pulses, triangular wave pulses, trapezoidal wave pulses, exponential decay wave pulses or sinusoidal wave pulses.

**11.** The method according to any of claims 1 to 10, **characterized in that** the pulses are square wave pulses.

**12.** The method according to any of claims 1 to 11, **characterized in that** the pulsed electric field is uniform.

**13.** The method according to any of claims 1 to 12, **characterized in that** the applied field is more than 100 V/cm.

**14.** The method according to any of claims 1 to 13, **characterized in that** the pulses are unipolar or bipolar.

**15.** The method according to any of claims 1 to 14, **characterized in that** the pulses are unipolar.

**16.** A method for destroying *Legionella* in a colonized aqueous flow, wherein the aqueous flow colonized by *Legionella* is subjected to a pulsed electric field according to any of claims 1 to 15.

**Patentansprüche**

**1.** Verfahren zur Behandlung eines von Legionellen besiedelten wässrigen Stroms durch Anlegen eines gepulsten elektrischen Feldes, wobei die impulse mit einer Frequenz zwischen 40 Hz und 60 Hz geliefert werden.

**2.** Verfahren nach Anspruch 1, **dadurch gekennzeichnet, dass** die Intensität des angelegten elektrischen Feldes unterhalb von ungefähr 1 kV/cm liegt.

**3.** Verfahren nach Anspruch 1 oder 2, **dadurch gekennzeichnet, dass** die Anzahl der an die Zelle angelegten Impulse in einer Größenordnung zwischen 1 und 200 liegt.

**4.** Verfahren nach einem der Ansprüche 1 bis 3, **dadurch gekennzeichnet, dass** der wässrige Strom natürlich, häuslich oder industriell ist.

**5.** Verfahren nach einem der Ansprüche 1 bis 4, **dadurch gekennzeichnet, dass** der Strom kontinuierlich oder sequenziell ist.

**6.** Verfahren nach einem der Ansprüche 1 bis 5, **dadurch gekennzeichnet, dass** der Strom kontinuierlich ist.

**7.** Verfahren nach einem der Ansprüche 1 bis 6, **dadurch gekennzeichnet, dass** das Feld im Wesentlichen senkrecht zum Strom ist.

**8.** Verfahren nach einem der Ansprüche 1 bis 6, **dadurch gekennzeichnet, dass** das Feld im Wesentlichen parallel zum Strom ist.

**9.** Verfahren nach einem der Ansprüche 1 bis 8, **dadurch gekennzeichnet, dass** die Impulse eine Dauer zwischen 1 und 20 ms, bevorzugt eine Größenordnung von 10 ms haben.

**10.** Verfahren nach einem der Ansprüche 1 bis 9, **dadurch gekennzeichnet, dass** die Impulse viereckige Wellen, dreieckige, trapezförmige, exponentiell abklingende oder sinusförmige Wellen sind.

**11.** Verfahren nach einem der Ansprüche 1 bis 10, **dadurch gekennzeichnet, dass** die Impulse viereckige Wellen sind.

**12.** Verfahren nach einem der Ansprüche 1 bis 11, **dadurch gekennzeichnet, dass** das gepulste elektrische Feld uniform ist.

**13.** Verfahren nach einem der Ansprüche 1 bis 12, **dadurch gekennzeichnet, dass** das angelegte Feld einen Wert größer als 100 V/cm hat.

**14.** Verfahren nach einem der Ansprüche 1 bis 13, **dadurch gekennzeichnet, dass** die Impulse unipolar oder bipolar sind.

**15.** Verfahren nach einem der Ansprüche 1 bis 14, **dadurch gekennzeichnet, dass** die Impulse unipolar sind.

**16.** Verfahren zur Zerstörung von Legionellen in einem besiedelten wässrigen Strom, bei dem der von Legionellen besiedelte wässrige Strom einem gepulsten elektrischen Feld unterworfen wird, gemäß dem Verfahren nach einem der Ansprüche 1 bis 15.

# FIG_1

# FIG_2